# EUROPEAN PATENT APPLICATION

(11) **EP 4 155 851 A1**
(43) Date of publication of application: **29.03.2023**
(21) Application number: 21275133.3
(22) Date of filing: 24.09.2021
(51) Int. Cl.: G05B 19/4065

(54) **METHOD OF OPERATING A MACHINE TOOL APPARATUS**

(71) Applicant: Renishaw PLC, Wotton-under-Edge, Gloucestershire GL12 8JR (GB)
(72) Inventor: HOYLE, Samuel, David, Wotton-under-Edge, GL12 8JR (GB); MERRIFIELD, Benjamin, Jason, Wotton-under-Edge, GL12 8JR (GB); NAI, Kenneth Cheng-Hoe, Wotton-under-Edge, GL12 8JR (GB)
(74) Representative: Rolfe, Edward William

(57) **Abstract**

A method of operating a machine tool apparatus, comprising: causing a tool mounted on the machine tool apparatus to work on a workpiece, during the working of the workpiece by the tool, at least one sensor monitoring the tool, machine tool apparatus and/or workpiece, for one or more signals indicative of the condition of the tool; and using the output of the one or more sensors to automatically configure when and/or how the tool and/or workpiece is inspected by at least one inspection device, the output of which is used to determine whether or not to keep using the tool.

## Description

This invention relates to a method of operating a machine tool apparatus, and associated methods and apparatus, and in particular relates to a method and apparatus for monitoring and checking the condition of a tool used to machine a workpiece on a machine tool apparatus.

It is known to provide a tool inspection device in the operating space of a machine tool, such that the condition of a tool used to machine a workpiece can be checked by taking the tool to the tool inspection device. Such checking can be done before, after, and/or at intervals part-way through a machining operation, and requires the tool not to be working on the workpiece at the time of inspection. Known tool inspection devices include devices which check for tool breakage/damage (e.g. is the tool there or not/are flutes damaged) such as the TRS2 non-contact tool breakage system available from Renishaw plc, and devices which (as well as detecting the presence or absence of a tool/damage) can analyse the tool in order to determine one or more properties (such as its size, e.g. diameter and length/tip position) of the tool, such as the NC4 non-contact tool setter and the OTS contact tool setter, both available from Renishaw plc.

Various documents propose the use of acoustic energy (AE) to identify tool wear/failure whilst the tool is being used to work on a workpiece, such as: "Acoustic emission signal through turning tools: A computational study", by A. Papacharalampopoulos, et al, 14th CIRP Conference on Modeling of Machining Operations; and EP0165482.

The present invention relates to an improved method for operating a machine tool apparatus, in particular an improved method for monitoring and checking the condition of a tool used to machine a workpiece on a machine tool apparatus.

According to a first aspect of the invention there is provided a method of operating a machine tool apparatus, comprising: causing a tool mounted on the machine tool apparatus to work on a workpiece, during the working of the workpiece by the tool, at least one sensor monitoring the tool, machine tool apparatus and/or workpiece, for one or more signals indicative of the condition of the tool; and using the output of the at least one sensor to automatically configure when and/or how the tool and/or workpiece is inspected (checked) by at least one inspection device, the output of which is used to determine whether or not to keep using the tool.

The inventors found that techniques for assessing the condition of a tool whilst it is being used to machine a workpiece might not (at least for their purposes) be sufficiently precise and/or reliable enough for determining whether or not a tool should continue to be used. There was a concern that relying on techniques could lead to tools with adequate condition being rejected and replaced prematurely (thereby leading to unnecessary waste and cost), or could lead to tools with inadequate condition not being identified and thereby failing beyond a point at which the tool breaks and/or damage to the workpiece is incurred (again, thereby leading to unnecessary waste and cost).

The present invention therefore aims to provide benefits such as reducing waste/scrap/cost and/or improving operational efficiency (e.g. by way of reducing the number of times a tool and/or workpiece needs to be inspected by the at least one tool inspection device).

The at least one sensor for monitoring the tool, machine tool apparatus and/or workpiece during the working of the workpiece by the tool can be used to provide an early warning indication that the tool is wearing and/or that a potentially tool-damaging event has taken place. Accordingly, with the present invention, it is possible to adopt a strategy whereby new tools are initially used to work on a workpiece without any, or only relatively very infrequent, inspection/checking of the tool or workpiece by the at least one inspection device. In this case, the output of the at least one sensor can be (e.g. continuously, e.g. in real-time) monitored for indication that the tool is wearing beyond a threshold amount and/or that a tool-wear/damage event has taken place, in response to which the tool and/or workpiece can be caused to be inspected (e.g. immediately/within a deadline) and/or the frequency of inspection of the tool and/or workpiece can be changed, e.g. increased. Such a strategy can be particularly useful when the working of the workpiece by the tool needs to be interrupted in order for the workpiece and/or tool to be inspected by the at least one inspection device.

The invention has been found to be particularly useful when the workpiece is made from a hard material (such as ceramics and glasses). This is because in such cases it has been found that tools can transition quickly and/or unpredictably from being adequate to inadequate, and can even suddenly transition to a state of catastrophic failure which causes workpiece and/or machine tool damage. Similarly, the invention has been particularly useful when machining using grinding tools, for example grinding burrs or just "burr" (e.g. a diamond coated burr) and grinding wheels for face grinding, which can be prone to failing suddenly and/or unpredictably. The present invention can help to catch such sudden and/or unpredictable tool transitions before damage occurs, without requiring excessive checking by the at least one inspection device, thereby maintaining or even improving operational efficiency. Nevertheless, whilst the most significant gains can be associated with hard materials and/or grinding tools, the invention can also provide similar benefits when machining softer materials and/or when other tools, such as cutting tools having flutes, are used.

Suitable sensors for monitoring the tool, machine tool apparatus and/or workpiece during the working of the workpiece by the tool for one or more signals indicative of the condition of the tool, include sensors configured to sense/measure at least one of: vibration (e.g. via a laser vibrometer), including sound (e.g. present in the tool and/or workpiece), including ultrasound; load/force (e.g. on the tool and/or workpiece); deflection (e.g. of the tool and/or workpiece); temperature (e.g. of the tool and/or workpiece). In a particularly preferred embodiment, especially when the tool comprises a grinding tool, in particular a grinding burr, the sensor comprises an acoustic energy (AE) sensor. As will be understood, an AE sensor is a sensor configured to sense high-frequency sound waves, in particular ultrasound waves. The at least one AE sensor could be configured to sense sound waves having a frequency above 20 kHz (kilohertz). An AE sensor could be configured to be particularly sensitive to a particular band of ultrasound waves within the ultrasound spectrum.

It might be preferable to provide, and monitor the output of, more than one sensor for monitoring the tool, machine tool apparatus and/or workpiece during the working of the workpiece by the tool for one or more signals indicative of the condition of the tool. This might be because the performance of a sensor is location dependent and so it is preferable to place a plurality of sensors at different locations, e.g. at different locations on the workpiece, or such that there are sensors on different parts, e.g. on the tool, workpiece and/or machine tool apparatus. Additionally/alternatively, it might be that it is beneficial to use a plurality of different types of sensor which are configured to monitor for different signals indicative of the condition of the tool (e.g. it might be beneficial to use a vibration sensor and a force sensor). Additionally/alternatively, it might be beneficial to use a plurality of sensors of the same type (e.g. a plurality of vibration sensors) but which are specifically tuned for different bands signals, e.g. a plurality of AE sensors which are configured to be particularly sensitive to different bands of ultrasound waves.

The monitoring of the output of the at least one sensor could be performed continuously during the working of the workpiece. However, this need not necessarily be the case. For instance, it might be preferable not to monitor the output of the at least one sensor during one or more particular periods of the working of the workpiece (e.g. at the very beginning and/or end, and/or at points when lots of noise is expected, such as at a transition between features/machining technique). As will be understood, it might be that the at least one sensor is/are continuously activated so as to continuously sense signals (and optionally output) a signal in response thereto, in which case it is possible, if desired, to ignore the output therefrom at particular periods of the working of the workpiece. Alternatively, the sensor could be deactivated at said particular periods.

Configuring when to inspect/check the tool and/or workpiece can comprise initiating inspection of the tool and/or workpiece via an inspection device. This could be such that inspection of the tool and/or workpiece by the at least one inspection device takes place within a predetermined time-based and/or work-based deadline. This could be a one-off inspection. This could be, for instance, because the signals picked up by the one or more sensors are indicative of the occurrence of significant, transient tool damage event.

Optionally, configuring when to inspect/check the tool and/or workpiece comprises initiating regular inspection of the tool and/or workpiece at a particular frequency/interval (which can be a time-based and/or work-based frequency/interval). Optionally, configuring when to inspect the tool and/or workpiece comprises changing a predetermined frequency/interval (which can be a time-based and/or work-based frequency/interval) at which the tool and/or workpiece is to be regularly inspected by the at least one inspection device. This could be, for instance, because the (e.g. acoustic energy) signals picked up by the (acoustic energy) sensor during machining are indicative of the gradual wear (e.g. smoothing) of the tool beyond at least one predetermined threshold.

Configuring how to inspect the tool and/or workpiece could comprise configuring at least one of: the duration for which the tool and/or workpiece is inspected; the extent to which the tool and/or workpiece is inspected (e.g. which part(s) of the tool and/or workpiece are inspected); the resolution and/or accuracy at which the tool and/or workpiece is inspected (e.g. the amount of data collected during the inspection). Configuring how to inspect the tool could comprise configuring which of a plurality of inspection device(s) is(are) used to inspect the tool and/or workpiece.

Predetermined criteria could be used to automatically configure how and/or when the tool and/or workpiece is inspected by an inspection device. Accordingly, the method can further comprise updating said predetermined criteria based on the output of the at least one inspection device. Accordingly, said criteria can be dynamically adapted depending on what the tool inspection device sees.

Using the output of the at least one sensor can comprise processing/analysing/monitoring the signal detected by the at least one sensor, for example over a predetermined period (which could be a time-based and/or work-based period). For example, using the output of the at least one sensor can comprise processing/analysing/monitoring the signal detected by the at least one sensor over at least a part of a machining process (e.g. a cutting, drilling, milling, grinding step), in other words, over at least a part of a process during which the tool interacts with the workpiece. Such a part of a machining process could be a middle part, such that the beginning and/or end parts of the machining process are ignored/discarded.

Using the output of the at least one sensor can comprise processing/analysing/monitoring the Kurtosis of a signal (e.g. of an AE signal) detected by the at least one sensor. For example, the method could comprise analysing the Kurtosis of a signal detected by the at least one sensor to determine when to initiate inspection of the tool and/or workpiece via an inspection device (e.g. within a predetermined time-based and/or work-based deadline). For instance, it has been found that spikes in the Kurtosis data can be indicative of a transient, significant, tool-damage event. The level/value of the Kurtosis of the signal detected by the at least one sensor could be used to identify when a change in when and/or how the tool and/or workpiece is inspected by at least one inspection device should take place. For instance, one or more Kurtosis thresholds could be provided which when passed initiates a change in when and/or how the tool and/or workpiece is inspected by at least one inspection device. Optionally, the gradient of the signal detected by the at least one sensor (i.e. the rate of change of the signal over time (over the number of cuts on the part)), or of a signal derived therefrom, could be used identify when a change in when and/or how the tool and/or workpiece is inspected by at least one inspection device should take place. For instance, one or more Kurtosis-curve-gradient thresholds could be provided which when passed initiates a change in when and/or how the tool and/or workpiece is inspected by at least one inspection device.

Using the output of the at least one sensor can comprise processing/analysing/monitoring the percentage of data points which lie outside at least one, optionally at least two, for example, three standard deviations of the (e.g. acoustic energy) signal data. For example, the method could comprise analysing the percentage of data points which lie outside at least one, optionally at least two, for example, three standard deviations of the at least one signal data to determine when to initiate, and/or change the frequency of, regular inspection of the workpiece and/or tool.

Using the output of the at least one sensor can comprise processing/analysing/monitoring a plurality of different aspects/properties of the signal detected by the at least one sensor. This can be helpful when monitoring different aspects of the tool, (e.g. significant transient tool-damage events, as well as more gradual wear of the tool). For example, both the Kurtosis and the percentage of data points which lie outside at least one, optionally at least two, for example, three standard deviations of the at least one signal data could be processed.

The at least one sensor can be mounted in any suitable place for picking up signals generated by the working of the workpiece by the tool. For example, in the case of an AE sensor, the AE sensor can be mounted in any suitable place where it is acoustically coupled to the tool and/or workpiece. In some preferred embodiments (e.g. when an AE sensor is used), the at least one sensor could be mounted directly on the workpiece itself. However, the at least one sensor could be mounted elsewhere, for example on the workpiece chuck/fixture (e.g. in the case of an AE sensor, it could be mounted on a vacuum chuck which attaches to an acoustic coupling medium to the workpiece), or could for instance be mounted on the machine tool table. Optionally, the at least one sensor is mounted on the at least one inspection device (which in turn can be mounted to the machine tool, e.g. the machine tool table). Accordingly, in this case, the at least one sensor and at least one inspection device can be provided as one unit. As will be understood, in the case of an AE sensor, preferably the AE sensor is mounted via an acoustically conductive medium, for example, a rubber-like material such as room temperature vulcanising (RTV) silicon.

Inspection of the workpiece and/or tool via the at least one inspection device might require the tool to not be working on the workpiece at the time of inspection. Accordingly, inspection of the workpiece and/or tool via the at least one inspection device might comprise interrupting the working of the workpiece by the tool. Inspection of the workpiece and/or tool via the at least one inspection device could comprise moving the tool and workpiece away from each other. For example, inspection of the tool and/or workpiece via the at least one inspection device can comprise moving the tool and/or workpiece to an inspection location which is remote from the workpiece working location. Inspection of the tool and/or workpiece can comprise moving an inspection device to the tool and/or workpiece. Inspection of the workpiece might comprise swapping the tool for an inspection device. Accordingly, it could be described that the at least one sensor is used during machining to indirectly monitor the tool for wear and/or damage (such that it is not necessary to interrupt working of the workpiece by the tool), and the tool inspection device is used to directly inspect the tool and/or workpiece to make a decision about the condition of the tool (wherein it is required to interrupt working of the workpiece by the tool).

The at least one inspection device can comprise a contact or a non-contact inspection device, for example an optical inspection device. Such an optical inspection device could be, for example, a camera-based inspection device (e.g. a camera probe), and/or, for example, a laser-based inspection device (e.g. a laser tool-setter). As will be understood, references herein to "light" and "optical" encompasses electromagnetic radiation (EMR) anywhere in the infra-red to the ultra-violet range. Examples of contact inspection devices include a contact probes, such as a touch-trigger probe (such as the OMP range of probes available from Renishaw plc) or a scanning/analogue probe (such as the SPRINT^{TM} probe available from Renishaw plc). Such an inspection device could be mounted in the spindle of the machine tool (e.g. in place of the tool which was/is to be used to work the workpiece).

The at least one inspection device could be configured to interact directly with the tool and/or workpiece so as to inspect its/their condition. This could be by physically interacting with the tool and/or workpiece (via contact means, such as a contact probe) or via non-contact means, such as for example optically interacting with the tool or workpiece (e.g. by breaking and/or reflecting a laser beam). For example, in those embodiments in which the tool is inspected, the at least one inspection device could be configured to interact directly with the tool so as to determine the condition/state/properties of the tool, such as, at least one of the: form (e.g. circularity); dimension(s) (e.g. diameter, length); presence/condition of one or more features of the tool (e.g. is tool or a part thereof broken); surface finish, of the tool.

As will be understood, in those embodiments in which the workpiece is inspected, the condition of the tool could be inferred from the condition/state/properties of the workpiece, for example from at least one of the: form (e.g. circularity); dimension(s) (e.g. diameter, length); presence/condition of one or more features of the workpiece (e.g. is workpiece or a part thereof broken); surface finish, of the workpiece.

According to another aspect of the invention there is provided a machine tool apparatus, comprising: a tool mounted thereon for working a workpiece; at least one sensor which is configured to monitor the tool, machine tool apparatus and/or workpiece during the working of the workpiece by the tool, for one or more signals indicative of the condition of the tool; at least one an inspection device for checking the condition of the tool; and at least one processing device which is/are configured use the output of the at least one sensor to automatically configure when and/or how the tool and/or workpiece is inspected (checked) by the at least one inspection device. The output of the at least one inspection device can be used to determine (either automatically or manually) whether or not to keep using the tool. Accordingly, the at least one processing device can be configured to receive or determine a decision as to whether or not to keep using the tool based on the output of the at least one inspection device. As will be understood, features of the first aspect of the invention described above are equally applicable to this aspect of the invention.

Embodiments of the invention will now be described, by way of example only, with reference to the following drawings, in which:
Figure 1 schematically illustrates a machine tool apparatus on which the method of the invention can be used;
Figure 2 illustrates an example workflow for operating the machine tool of Figure 1 in accordance with the present invention;
Figure 3 is a graph illustrating the Kurtosis of the AE signal recorded during a five second period for a plurality of cuts of the workpiece by the tool mounted on the machine tool of Figure 1;
Figures 4 and 5 are graphs illustrating the Kurtosis of the AE signal for each half-second slice of the five second data collected for two cuts;
Figure 6 illustrates the distribution of AE signal data for each of a plurality of cuts;
Figure 7 a graph which plots, for each of the plurality of cuts, the percentage of AE signal data points which lie outside three standard deviations of the AE signal data;
Figure 8 is a graph illustrating the route-mean-square (RMS) of the AE signal data for each of a plurality of cuts.

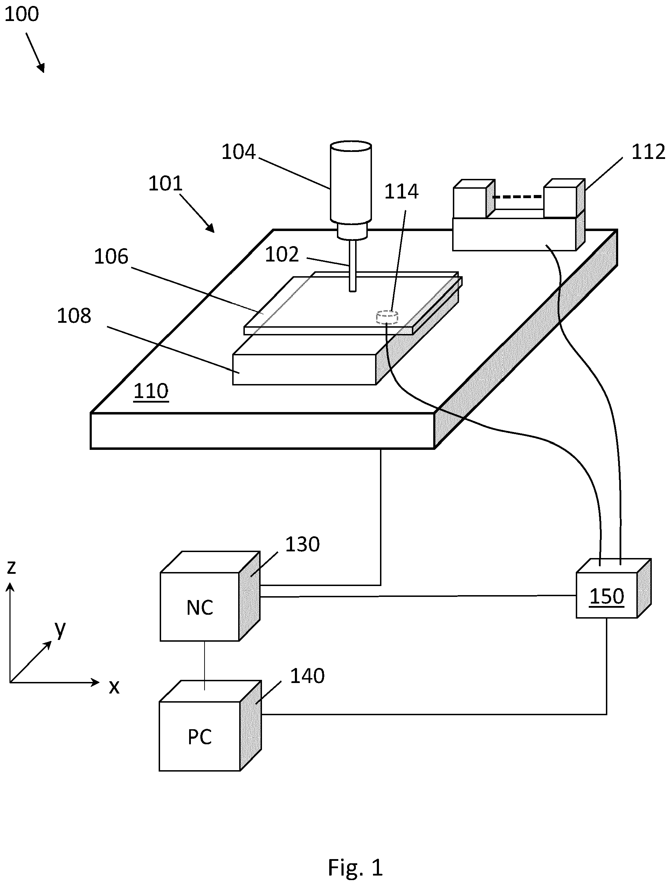

Referring to Figures, Figure 1 schematically illustrates a machine tool apparatus 100 comprising a machine tool 101, a numerical controller 130 (NC) (for example, a computer numerical controller or "CNC"), a PC 140, and an interface 150.

A tool 102, in this example a diamond-coated grinding tool/burr, is mounted in a spindle 104 of the machine tool 101. A workpiece 106, in this example a glass or ceramic workpiece, is mounted via a vacuum chuck 108 on a table 110 of the machine tool. The tool/spindle and workpiece/table are moveable relative to each other in at least one degree of freedom via a motorised movement system/frame (not shown), and in this embodiment they are moveable relative to each other in three orthogonal degrees of freedom (x, y, z). Such relative motion can effected by motion of the table 110, motion of the spindle 104, or a combination thereof. As well as the tool/spindle being rotatable about its axis (to thereby spin), the machine tool 101 could provide one or more additional axes of rotation for facilitating relative rotation of the tool 102 and workpiece 106 thereabout (e.g. the vacuum chuck 108 could be mounted on a rotary table). The NC 130 controls the relative position of the spindle 104 and table 110 via motors (not shown) in order to cause the tool 102 to work on the workpiece 106. The NC 130 can be programmed with a machining operation, for example via the PC 140.

In the embodiment described a tool inspection device 112 is mounted on the table 110 of the machine tool 101. In the embodiment described the tool inspection device is a break-beam non-contact tool setter device, such as the NC4 system available from Renishaw plc. However, as will be understood, this need not necessarily by the case and other types of inspection device could be used such as, for example, a vision-based tool inspection device such as the CU2 Tool available from Conoptica AS or a contact tool inspection device such as the OTS contact tool setter available from Renishaw plc.

Furthermore, a sensor 114, in this embodiment an acoustic energy (AE) sensor, is provided so as to sense signals, in this embodiment acoustic energy, generated by the working of the workpiece 106 by the tool 102. In the embodiment described, the AE sensor 114 is mounted on the vacuum chuck 108, but is configured to be in direct contact with the workpiece 106 when the workpiece 106 is mounted on the vacuum chuck 108, so as to directly sense AE energy from the workpiece 106 during machining of the workpiece 106. In the embodiment described the AE sensor is a wideband AE sensor capable of sensing ultrasound frequencies up to 1 MHz (megahertz). Whilst the AE senor needs to be acoustically coupled to the workpiece, it is not essential that the AE sensor 114 is mounted directly in contact with the workpiece 106. For example, the AE sensor could be mounted on the workpiece chuck/fixture 108, on the table 110 or on another part of the machine tool 101, for example on the tool inspection device 112, and configured to only sense AE energy therewithin. However, it has been found that the AE sensor provides the most useful data when it is mounted directly in contact with the workpiece itself.

The tool inspection device 112 and the AE sensor 114 communicate with the interface 150, for example via a wired and/or wireless connection, which in turn communicates with the NC 130 and/or PC 140, via a wired and/or wireless connection. Alternatively, the tool inspection device 112 and/or the AE sensor 114 could communicate directly with the NC 130 and/or PC 140.

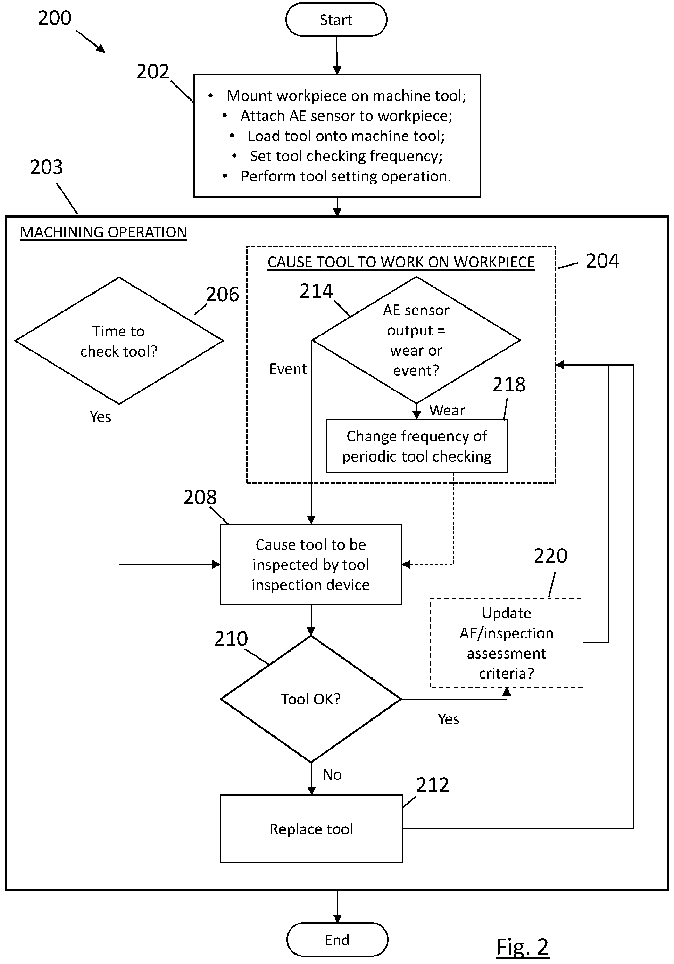

Figure 2 illustrates an example workflow 200 for operating a machine tool in accordance with the present invention. The method begins at step 202 at which a number of initialising actions take place, including mounting the workpiece 106 onto the machine tool (in this case via the vacuum chuck 108), mounting the AE sensor 114 to be in direct contact with the workpiece 106 (which in the described embodiment occurs automatically when the workpiece is mounted onto the vacuum chuck 108 due to the location and configuration of the AE sensor 114), loading the tool 102 in the spindle 104 of the machine tool 101, and setting an initial frequency/period for routinely checking the tool 102 via the tool inspection device 112 (which could initially be set to null, i.e. such that initially the system is not set to check the tool routinely). As will be understood, the frequency/period could be time-based and/or could be work-based (i.e. based on the amount of work the tool has been used for, such as the number of cuts the tool has performed, or after the working of each workpiece is completed). The initialisation step 202 could also comprise an initial tool inspection action which can comprise taking the tool 102 in the spindle to the tool inspection device 112 and performing an initial tool setting operation to check the presence of the tool and optionally to determine one or more properties of the tool such as its length and/or diameter.

Once the initialisation step 202 has completed, the control proceeds to step 203 at which the machining operation takes place. The machining operation comprises a step 204 of causing the tool 102 to work on the workpiece 106. This comprises the NC 130 operating the spindle 104 to spin the tool 102 and controlling the relative position of the tool 102/spindle 104 and workpiece 106/table 110 such that tool interacts with the workpiece 106 (e.g. to thereby cut, drill, mill, polish, etc, the workpiece).

As illustrated by decision process 206, during the machining operation there is a continual monitoring of whether it is time to check the tool based on the predetermined tool-checking frequency/period (which as mentioned above could be time-based or work-based). If so, then the tool 102 is taken to the tool inspection device 112 and inspected at step 208.

At step 210, the signals from the tool inspection device 112 are analysed (e.g. by the tool inspection device 112 itself, the interface 150, NC 130 and/or PC 140, and/or by a human operator) to determine if the condition of the tool 102 is still adequate for use. Such analysis and/or the ultimate decision, can be performed automatically or manually, or via a combination of the two. Such analysis could comprise establishing the condition/state/properties of the tool, such as, establishing at least one of the: form (e.g. circularity); dimension(s) (e.g. diameter, length); presence/condition of one or more features of the tool (e.g. is tool or a part thereof broken); surface finish, of the tool. If it is determined that the condition of the tool is still adequate, then the working of the (or a subsequent) workpiece resumes (the additional step 220 will be explained in more detail below). If it is determined that the condition of the tool is no longer adequate, then the tool is replaced at step 212 before working of the same (or a subsequent) workpiece is resumed.

As will be understood, the process for determining whether the condition of the tool 102 is still adequate for use is outside the scope of this invention and document, and therefore is not explained in detail. Nevertheless, as will be understood, a suitable process for determining whether the condition of the tool 102 is still adequate for use could comprise checking one or more of the following: whether the tool is broken; the diameter of the tool; the length of the tool; for signs of wear of the tool; and/or the form of the tool. Suitable apparatus and processes are for example described in WO2006/027577, DD239369, WO2019/053432, WO2019/048832 and WO2020/074886. Furthermore, at step 210, the workpiece could be inspected as well as or instead of the tool in order to determine whether or not the tool should be replaced. For instance, the dimensions, form, and/or the surface finish of the cut workpiece could be measured in order to deduce the state/condition of the tool.

As mentioned above, the system could be set up such that initially there is no predetermined frequency/period for routinely checking the tool, in which case the decision process 206 will be inactive until a predetermined frequency/period is set at step 218 (explained in more detail below).

As well as the regular/routine checking of the tool 102 effected by the decision process 206, acoustic energy (AE) signals picked up by the AE sensor 114 during the working of the workpiece 106 by the tool 102 are monitored continuously and in real-time, as illustrated by decision process 214. In particular, the AE signals are processed/analysed/monitored (in a way explained in more detail below) to monitor for signs of "wear" and also to monitor for signs of an "event" which might indicate significant and sudden damage to the tool. Accordingly, the AE sensor is used to indirectly monitor the condition of the tool. Examples of such an "event" could include, for instance: a bond fracture (e.g. a diamond chip breaking away from the burr tool 102); a crack forming in the tool; the tool breaking; a flute chipping in a fluted drill bit. If "wear" of the tool is suspected, then the frequency/period at which the tool is to be routinely inspected can be updated at step 218. If, up to this point, no routine inspection of the tool was taking place, then step 218 can set an initial frequency/period for routinely checking the tool. The chosen frequency/period can be based on a number of factors including, for example: the workpiece 106 material; the type of tool 102; the type of work the tool is being used to perform; the AE signals received by the AE sensor 114 (e.g. based on whether the AE signals are indicative of only light wear, or significant wear); the outcome of one or more previous inspections of the tool by the tool inspection device; and/or the required workpiece tolerances. Optionally, as indicated by the dashed line between steps 218 and 208, the method can comprise causing the tool 102 to be inspected by the tool inspection device 112 within a predetermined time-based or work-based deadline if the AE signals are indicative of "wear" of the tool beyond a threshold.

If the AE signals indicate that "event" has taken place, then the method comprises causing the tool 102 to be inspected by the tool inspection device 112 within a predetermined time-based or work-based deadline. For example, the method could cause the current interaction between the tool and workpiece to be interrupted immediately and the tool taken to the tool inspection device 112 for checking directly. Optionally, the method could comprise waiting for the current interaction with the workpiece 106 (e.g. at the end of the current cut taking place) to finish and then take the tool 102 to the tool inspection device 112 for checking. In addition, or alternatively, to these work-based deadlines for checking the tool 102, the method can comprise setting a time-based deadline for taking the tool 102 to the tool inspection device 112 for checking. For example, the method could require that following an "event", the tool 102 is taken to the tool inspection device 112 for checking, by the earlier of a time-based deadline (e.g. within 30 seconds) and work-based deadline (e.g. at the end of the current cut).

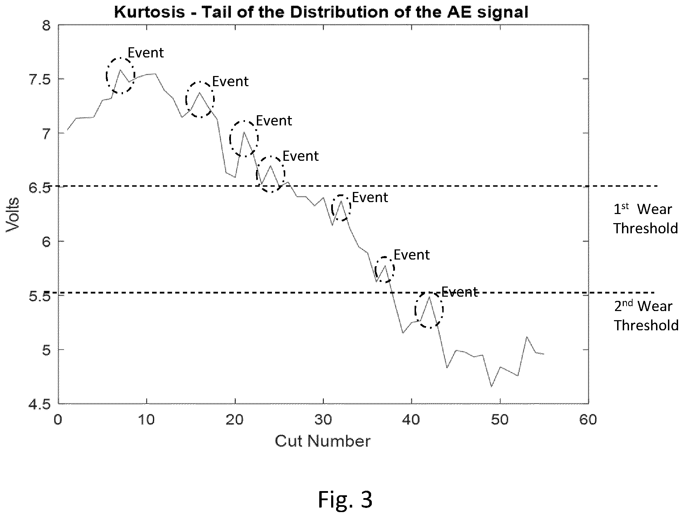

Example processes for analysing the AE signals for indications that an unacceptable tool "wear" or a tool "event" has occurred will now be described. It has been found that it can be particularly beneficial to analyse the Kurtosis of the AE signals detected by the AE sensor 114. Figure 3 illustrates the Kurtosis of the AE signal detected by the signal over a plurality of cuts of a silicon carbide workpiece 106 by a grit diamond burr tool 102. In the example described, the AE signal is continuously collected over a thirty second cutting operation. In the present embodiment, the AE signal at the beginning of the cut (e.g. for the first second after the tool makes contact with the workpiece) is discarded/ignored because such a period the AE signal contains a significant amount of noise due to the tool engaging the workpiece, which might adversely affect the AE signal analysis .

As illustrated by Figure 3, it has been found that the Kurtosis of the AE signal recorded during a cutting operation initially increases over a few initial cuts, owing to the initial "bedding-in" of the tool (for example when, as expected, a number of weakly bonded diamond chips are broken away from the tool), but thereafter gradually decreases over further cuts, owing to a gradual degradation in the condition of the tool 102. Such degradation can be caused by an excessive number of diamond grit pieces falling off, the tool becoming smoother and less efficient at cutting, and/or bald spots forming on one side due to uneven wear of the tool (e.g. it can become flatter on one side, for instance due to runout of the spindle 104/tool 102).

Accordingly, one or more "Kurtosis wear thresholds" can be set, such that when the Kurtosis dips below such a threshold, a change (in particular, an increase) in the frequency of inspection of the tool 102 by the tool inspection device 112 is made. In the example of Figure 3, it is shown that 1^{st} and 2^{nd} wear thresholds are set. Accordingly, with reference to Figure 2, the process 200 is configured such that initially no routine inspection of the tool 102 by the tool inspection device 112 takes place, but when step 214 of the process 200 identifies that the Kurtosis of the AE signal has dropped below the 1^{st} wear threshold (e.g. below 6.5 Volts), step 218 is configured to initiate routine inspection of the tool 102 at regular intervals (e.g. after every 5 cuts) to check the condition of the tool 102. Furthermore, assuming that the tool 102 is not rejected and continues to be used, if and when the step 214 of the process 200 identifies that the Kurtosis of the AE signal has dropped below the 2^{nd} wear threshold (e.g. below 5.5 Volts), step 218 is configured to increase the rate of routine inspection of the tool 102 at regular intervals (e.g. after every 2 cuts) to check the condition of the tool 102. This way, compared to a system in which the tool is always inspected after every 2 cuts, the efficiency of the machining operation is significantly increased, whilst still maintaining sufficient monitoring of the condition of the tool so as to reduce the risk of a tool of inadequate condition being used to machine workpieces. In addition to or as an alternative to such Kurtosis thresholds for triggering step 218 of Figure 2, the gradient of the Kurtosis curve (i.e. the rate of change of the Kurtosis value over time (over the number of cuts on the part)) could be monitored to provide an indication of the state of wear of the tool. For instance, a gradient of close to zero might be indicative of a tool that has substantially worn and therefore needs to be inspected to check whether or not this is the case. Accordingly, one or more Kurtosis-curve-gradient thresholds could be used during step 214 of Figure to initiate step 218 of Figure 2.

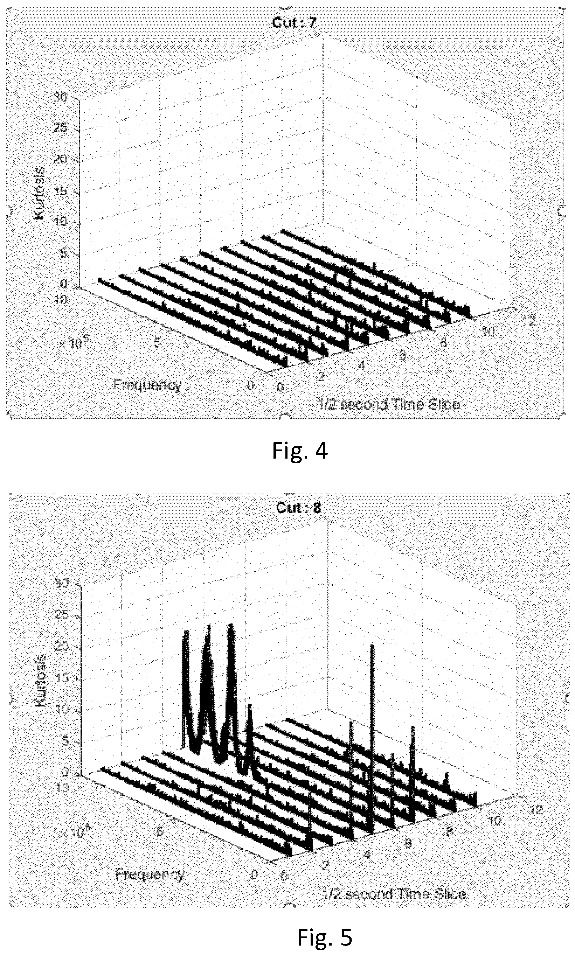

With reference to step 214 of Figure 2, and as described above, the AE sensor can also (or instead) be used to monitor for AE signals which are indicative of significant, transient, tool-damage "events" that might have taken place (thereby prompting a non-routine check of the tool). It has been found spikes in the AE signal data can be indicative of such a significant, transient, tool-damage "event". For example, Figure 3 highlights a number of spikes in the Kurtosis of the AE signal, and it is thought that such spikes in the Kurtosis are indicative of a significant, transient, tool-damage "event", such as bond fracture, e.g. a diamond chip breaking away from the burr tool 102. Any suitable spike identification algorithms for identifying spikes in data, can be used for identifying spikes in the Kurtosis data. Figures 4 and 5 serve to illustrate at a finer resolution the Kurtosis of the AE signal for successive cuts and the effect a significant, transient, tool-damage "event" has on the Kurtosis of the AE signal. In particular, these figures show the Kurtosis of the AE signal for each half-second slice of the five second data collected for each cut. Figure 4 (cut 7) shows the Kurtosis for a normal cut and Figure 5 (cut 8) shows Kurtosis for a cut where a significant, transient, tool-damage "event" is suspected to have taken place. Accordingly, as will be understood, rather than deciding whether excessive "wear", or in particular an "event", has occurred, on the basis of the Kurtosis of the AE signal for complete cut, such a decision could be made on the analysis of the AE signal for a sub-portion of the cutting operation. For example, if the Kurtosis of the AE signal for one, or a close succession of, half-second slice(s) increases significantly, then this could be indicative of an "event" and identified as such at step 214, such that step 208 could be initiated immediately (or within a predetermined time-frame).

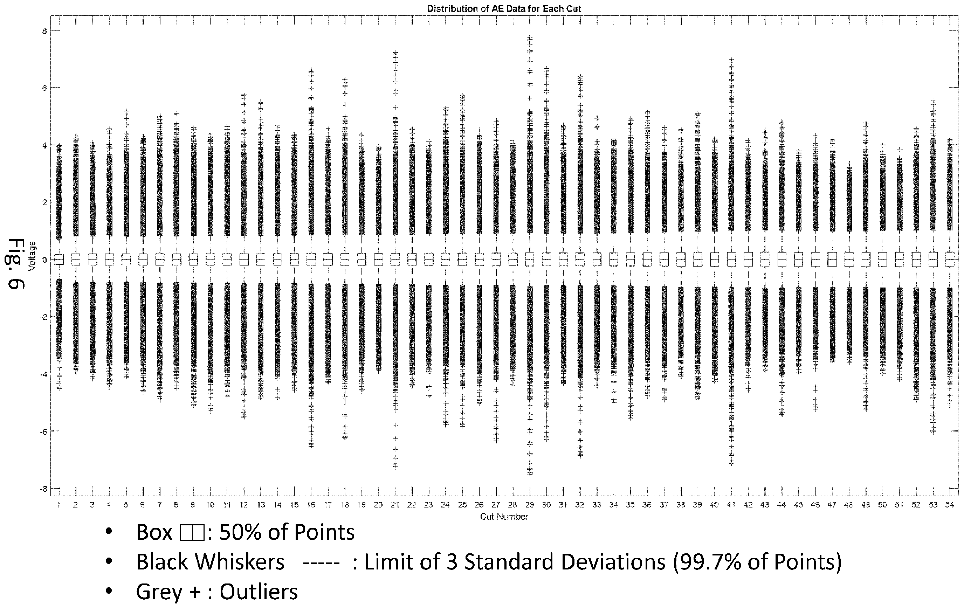

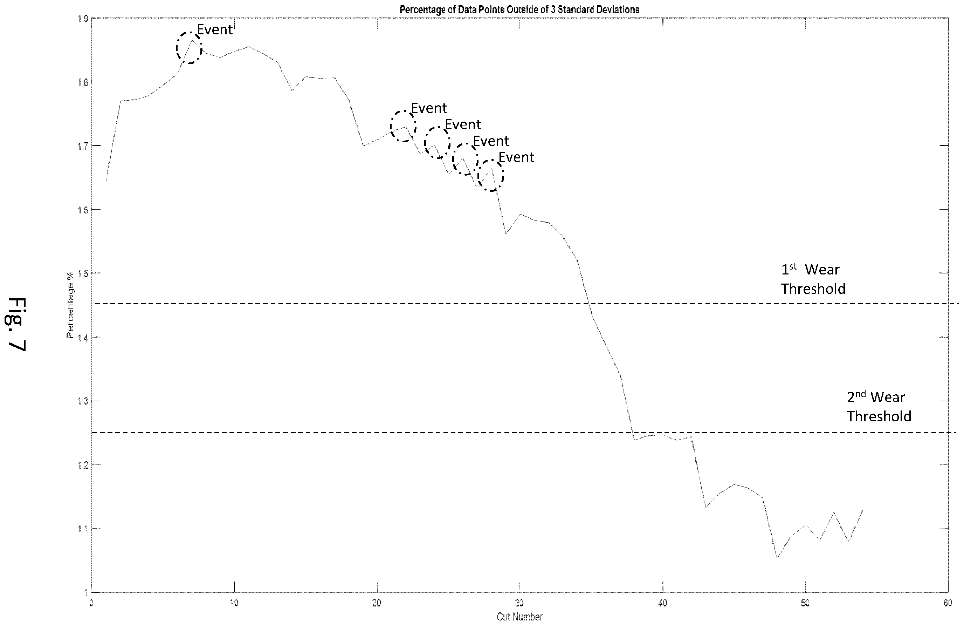

Another method for analysing the AE signals for indications of tool wear and significant tool damage "events" is explained in connection with Figures 6 and 7. In this method, rather than looking at the Kurtosis of the AE signal, the distribution of the AE signal data for each cut is analysed to identify the percentage of data points that fall outside three standard deviations of the AE signal. Figure 4 illustrates the distribution of AE signal data for each cut and Figure 6 is a graph which plots the percentage of data points which lie outside three standard deviations of the AE signal data. It has been found that the percentage of data points which lie outside three standard deviations of the AE signal data reduces as the tool wears, and therefore this can also be a particularly beneficial way of analysing the AE signals for indications of tool wear. Similar to the method which analysis the Kurtosis (i.e. as per Figure 3), one or more thresholds could be set which trigger an adjustment of when the tool 102 is checked by the tool inspection device 112. Monitoring the percentage of outlier data points has been found to provide smoother trend data for the wear of the tool, but is less sensitive to the above-mentioned transient tool damage "events". Accordingly, it might be beneficial to concurrently use the above describe Kurtosis-analysis method of Figure 3 for monitoring for significant transient tool damage "events", and the outlier data point method of Figures 6 and 7 for monitoring the overall wear of the tool.

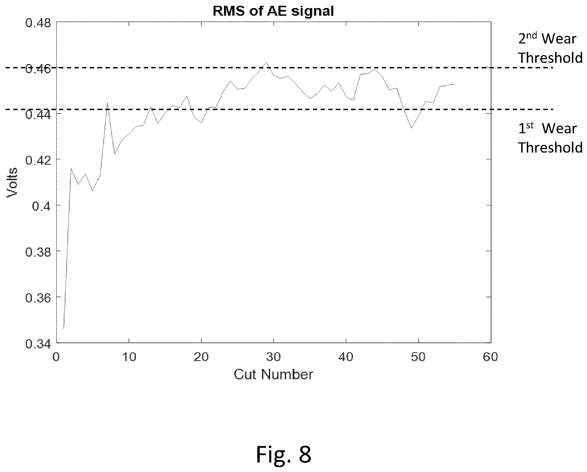

Yet another method for analysing the AE signal will now briefly be described in connection with Figure 8. Here, the root-mean-square (RMS) of the AE signal for each cut is determined. Whilst, as can be seen from Figure 8, an overall trend in the data can be seen as the tool wears, the trend is much less visible than the methods of Figures 3 and 7. Accordingly, whilst the RMS of the AE signal could be used to identify the above described "events" and "wear", it has been found that this approach provides less reliable detection and measure.

As illustrated by step 220 in Figure 2, an optional embodiment of the invention comprises using the outcome of the tool checking step 210 to update the criteria used to flag whether an "event", or "wear" beyond a threshold, has likely taken place. For instance, the above text describes an embodiment in which 1^{st} and 2^{nd} wear thresholds are set. In such a case, it might be that, following an inspection of the tool via the inspection device which been prompted by the Kurtosis dropping below the 1^{st} wear threshold, it is determined that the tool has worn more than might otherwise be expected. Accordingly, if so, this might indicate that the tool is wearing more quickly than expected and so at step 220 the 2^{nd} wear threshold could be adapted accordingly (e.g. could be increased) to compensate for this. Additionally/alternatively, the 1^{st} wear threshold for subsequent tools could be adapted accordingly (e.g. could be increased) such that the adapted 1^{st} wear threshold is used for subsequent tool(s). The vice-versa could also be true. For instance, if the tool is wearing less than expected, then the wear Kurtosis wear threshold(s) could be lowered in order to avoid over-checking the tool, and in turn increase operational efficiency. Accordingly, method could implement self-learning in order to improve operational efficiency.

In the above-described embodiments, 1^{st} and 2^{nd} wear thresholds are set.

However, as will be understood, this need not necessarily be the case. Optionally, only one wear threshold is set. Optionally, more than two wear thresholds are set.

In the above-described embodiments, the tool 102 is directly inspected at step 210 by a tool inspection device 112 to determine the condition of the tool. However, as will be understood, the workpiece 106 could be inspected (instead of/as well as the tool) in order to determine the condition of the tool. For example, a contact probe (such as the OMP400 probe from Renishaw plc) could be loaded in the spindle 104 in place of the tool 102 in order to inspect the workpiece 106, e.g. to establish at least one of the: form (e.g. circularity); dimension(s) (e.g. diameter, length); presence/condition of one or more features of the workpiece (e.g. is the workpiece or a part thereof broken); surface finish, of the workpiece. From the inspection of the workpiece, the condition of the tool could be inferred, and therefore in-turn, a decision on whether or not to continue to use the tool can be made from the inspection of the workpiece.

In the above-described embodiments a ceramic (in particular, a silicon carbide) workpiece 106 was used to generate the AE signal data which serves to illustrate the AE signal data processing techniques which can be used to implement the invention. As mentioned above, the invention has been found to be particularly useful for workpieces made from relatively hard materials such as ceramic (e.g. of which a Yttria-stabilised zirconia workpiece is another example) and glass (which as will be understood is sometimes classified as a ceramic), but nonetheless the invention can be used in connection with workpieces made from other materials, such as metal for example.

The above-described embodiment comprises using the output of one or more sensors monitoring the tool, machine tool apparatus and/or workpiece during machining for one or more signals indicative of the condition of the tool to automatically configure *when* the tool and/or workpiece is inspected by at least one inspection device. Additionally or alternatively, the output of the one or more sensors monitoring the tool, machine tool apparatus and/or workpiece for one or more signals indicative of the condition of the tool during machining could be used to automatically configure *how* the tool and/or workpiece is inspected by at least one inspection device. For instance, it might be that the apparatus is configured to perform regular inspections of the tool and/or workpiece via the at least one inspection device, and how such regular inspection is carried out changes in response to the output of said sensor(s) which monitor the tool, machine tool apparatus and/or workpiece during machining for one or more signals indicative of the condition of the tool. For example, at least one of the following could be changed: the duration for which the tool and/or workpiece is inspected; the extent to which the tool and/or workpiece is inspected (e.g. which part(s) of the tool and/or workpiece are inspected); the resolution and/or accuracy at which the tool and/or workpiece is inspected (e.g. the amount of data collected during the inspection); changing which of a plurality of inspection device(s) is(are) used to inspect the tool and/or workpiece. As a particular example, on passing the 1^{st} wear threshold described above in connection with Figure 3, as well as (or instead of) changing the frequency of inspection via the inspection device, the extent to which the tool and/or workpiece is inspected could be changed. As another example, in response to the signals from the sensor(s) which monitor the tool, machine tool apparatus and/or workpiece during machining indicating that an "event" has occurred, the resolution and/or accuracy at which the tool and/or workpiece is inspected could be changed compared to those inspections which do not place in response to an "event".

In the above-described embodiment, the sensor monitoring the tool, machine tool apparatus and/or workpiece for one or more signals indicative of the condition of the tool comprises an acoustic energy sensor. However, whilst the use of an acoustic energy sensor has been found to be a particularly preferred/optimum technique, this need not necessarily be the case, and for instance other types of sensors could be used. For example, a temperature sensor could be provided which monitors the temperature of the tool (the sensor could be separate from the tool or could be provided as an integral part of the tool). As the tool wears, the tool will increasingly rub against, rather than for example cut, the surface of the workpiece, thereby causing an increase in temperature. Accordingly, similar to the above embodiment, one or more temperature thresholds can be set which when exceeded trigger inspection, and/or increase frequency of inspection, of the tool by the inspection device. In another embodiment, a strain gauge sensor could be provided on the workpiece chuck/fixture which monitors the force applied by the tool during machining. As the tool wears, the force applied to the workpiece will increase as its cutting efficiency decreases. Accordingly, similar to the above embodiment, one or more force thresholds can be set which when exceeded trigger inspection, and/or increase frequency of inspection, of the tool by the inspection device. If desired, a combination of sensors could be used for monitoring the condition of the tool during machining.

## Claims

1. A method of operating a machine tool apparatus, comprising:
causing a tool mounted on the machine tool apparatus to work on a workpiece,
during the working of the workpiece by the tool, at least one sensor monitoring the tool, machine tool apparatus and/or workpiece, for one or more signals indicative of the condition of the tool; and
using the output of the one or more sensors to automatically configure when and/or how the tool and/or workpiece is inspected by at least one inspection device, the output of which is used to determine whether or not to keep using the tool.

2. A method as claimed in claim 1, in which configuring when to inspect the tool and/or workpiece comprises initiating inspection of the tool and/or workpiece via the inspection device.

3. A method as claimed in claim 2, in which initiating the inspection of the tool and/or workpiece comprises causing the tool and/or workpiece to be inspected by the inspection device within a predetermined time-based and/or work-based deadline.

4. A method as claimed in any preceding claim, in which configuring when to inspect the tool and/or workpiece comprises initiating a routine of regular inspection of the workpiece and/or tool at a particular frequency.

5. A method as claimed in any preceding claim, in which configuring when to inspect the tool and/or workpiece comprises changing a frequency at which the tool and/or workpiece is configured to be regularly inspected by the inspection device.

6. A method as claimed in claim 1, in which configuring how to inspect the tool and/or workpiece comprises configuring at least one of: the duration for which the tool and/or workpiece is inspected; the extent to which the tool and/or workpiece is inspected; the resolution at which the tool and/or workpiece is inspected.

7. A method as claimed in any preceding claim, in which predetermined criteria is used to automatically configure how and/or when the tool and/or workpiece is inspected by the inspection device, and wherein the method further comprises updating said predetermined criteria based on the output of the inspection device.

8. A method as claimed in any preceding claim, in which the at least one sensor comprises at least one acoustic energy sensor.

9. A method as claimed in any claim 8, in which using the output of the acoustic energy sensor comprises analysing the Kurtosis of a signal detected by the acoustic energy sensor.

10. A method as claimed in any preceding claim, in which inspection of the tool and/or workpiece via the inspection device comprises interrupting the working of the workpiece by the tool.

11. A method as claimed in claim 10, in which inspection of the tool and/or workpiece via the inspection device comprises moving the tool and/or workpiece to an inspection location which is remote from the workpiece working location.

12. A method as claimed in any preceding claim, in which the inspection device comprises a non-contact inspection device, for example an optical inspection device.

13. A method as claimed in any preceding claim, in which the inspection device comprises a probe for inspecting the workpiece, for instance mounted on the machine tool in place of the tool.

14. A method as claimed in any preceding claim, in which the material of the workpiece being worked comprises a ceramic or glass material.

15. A method as claimed in any preceding claim, in which the tool comprises a burr, for example a diamond coated burr.
